# EUROPEAN PATENT SPECIFICATION

(11) **EP 3 000 675 B1**
(45) Date of publication and mention of the grant of the patent: **12.04.2017**
(21) Application number: 15181242.7
(22) Date of filing: 17.08.2015
(51) Int. Cl.: B60T 10/00

(54) **METHOD AND SYSTEM TO CONTROL A DISENGAGEABLE RETARDER**
VERFAHREN UND SYSTEM ZUR STEUERUNG EINES AUSRÜCKBAREN RETARDERS
PROCÉDÉ ET SYSTÈME POUR COMMANDER UN RETARDATEUR DÉBRAYABLE

(30) Priority: 11.09.2014 SE 1451048
(43) Date of publication of application: 30.03.2016
(73) Proprietor: Scania CV AB, 151 87 Södertälje (SE)
(72) Inventor: RUDBERG, Arvid, 126 37 Stockholm (SE); EVALDSSON, Martin, 131 31 Nacka (SE)
(74) Representative: Scania CV AB

(56) References cited:
- WO-A1-2008/140400
- US-A1- 2008 004 784

## Description

### Technical field

The present invention relates to a method for the control of a connectible and disconnectable retarder according to the preamble to claim 1. A prior art example is shown in US 2008 004 784. The present invention also relates to a system arranged for the control of a connectible and disconnectable retarder according to the preamble to claim 16, and a computer program and a computer program product, which implement the method according to the invention.

### Background

The following background description constitutes a description of the background to the present invention, and thus need not necessarily constitute prior art.
Vehicles today often comprise several different braking systems, such as a customary service braking system and one or several auxiliary brake(s). Auxiliary brakes may for example act on the vehicle's powertrain and/or act to increase the torque required to revolve the engine, in order thus to brake the vehicle. Auxiliary brakes, such as for example a retarder, a regenerative electrical brake, a decompression brake and/or an exhaust brake, are arranged so that they may be used in a sustainable manner to brake the vehicle, for example on long downhill slopes, without being worn, and to reduce the load on the vehicle's service brakes.
The retarder may, for example, be hydraulically, pneumatically or electrically controlled and comprises a rotatable component in the form of a rotor and/or a pump wheel. When the retarder has to be activated, a liquid, such as for example oil, coolant or a similar liquid, is pumped between a rotating part and a static part, which have shovels to control the liquid. The friction thus arising brakes the rotation of the shaft on which the retarder acts, for example the output shaft of the gearbox.

Furthermore, a retarder may either be fixedly connected, or be connectible and disconnectable. For a fixedly connected retarder, the mechanism is fixedly connected on, for example, the output shaft of the gearbox and rotates together with the same during operation, but has a braking effect that may be activated and deactivated. One advantage with a fixedly connected retarder is that it is robust and reliable from an operational point of view. One disadvantage with the fixedly connected retarder is that it leads to unwanted friction losses during the progress of the vehicle, as it always rotates with the shaft, even when the retarder is not used to brake the vehicle.

### Brief description of the invention

A retarder which may be connected and disconnected has lower unwanted friction losses for the vehicle than a fixedly connected retarder. This is because the retarder's rotatable components, when the retarder's braking action is deactivated and the retarder may be disconnected, rotate freely in relation to the shaft on which it acts at deceleration.

When the connectible and disconnectable retarder is used to brake the vehicle, it thus needs to be connected with the shaft that has to be decelerated. For this purpose, the connectible and disconnectable retarder is among others equipped with a synchronisation mechanism, which is used to rev up the retarder's rotatable components to a rotational speed that is synchronous with the shaft to be decelerated. The synchronising mechanism is sensitive to loads before the retarder has been fully connected. If the braking torque is released into the retarder before the manoeuvre of the latter is fully completed, the manoeuvring device and/or synchronisation mechanism may quickly be destroyed, due to the large forces that act on the retarder when it is used to brake the vehicle. In addition, a certain wear arises on components in the synchronising mechanism at the connection and/or disconnection of the retarder, for example when heat is generated at cone-shaped fittings arranged in the synchronising mechanism due to friction when the rotational speeds are synchronised.
It is therefore one objective of the present invention to provide a method and a system for control of a connectible and disconnectable retarder, which at least partly solve these problems.
This objective is achieved through the above mentioned method in accordance with the characterising portion of claim 1. This objective is also achieved through the above-mentioned system according to the characterising portion of claim 15, and the above-mentioned computer program and computer program product, according to claim 14.
The present invention provides a method and a system to control a connectible and disconnectable retarder, which is initially connected. When the retarder is connected and activated to provide a braking action, it acts on a powertrain in a vehicle to brake the vehicle.
The system comprises a simulation device. The simulation device is arranged for simulation of at least one future velocity profile vₛᵢₘ for at least one respective actual vehicle speed v_{act} within a road section ahead of the vehicle. The simulation is based on information relating to the road section ahead, and assumes that the connectible and disconnectable retarder is connected during at least an initial part of the road section. For example, the simulations according to various embodiments may be based on positioning information and map data, or on information created in the vehicle, such as through the use of cameras or other sensors.

The system also comprises a first determining device. The first determining device is arranged to determine at least one respective first position Pₘₐₓ, at which at least one respective first position Pₘₐₓ the at least one respective actual vehicle speed v_{act} will exceed a maximum permitted speed vₘₐₓ. The first determining device is arranged to carry out the determination of the at least one respective first position Pₘₐₓ based on the at least one simulated future velocity profile vₛᵢₘ, which corresponds to the at least one actual vehicle speed v_{act}.

The system also comprises a second determining device. The second determining device is arranged to determine whether a velocity development for said vehicle will be adversely impacted in relation to the maximum permitted speed vₘₐₓ, if the connectible and disconnectable retarder is connected. This may also be described as the second determining device being arranged to determine whether an extra energy cost Eₑₓₜᵣₐ will arise before the vehicle reaches the at least one respective first position Pₘₐₓ, if the connectible and disconnectable retarder is connected. The second determining device is arranged to base this determination on the at least one future velocity profile vₛᵢₘ. The determination of whether or not this adverse impact on the velocity development arises, that is to say whether this extra energy cost Eₑₓₜᵣₐ arises, may be carried out in a number of different ways according to different embodiments of the present invention.

The system also comprises a retarder control device. The retarder control device is arranged to control the connectible and disconnectable retarder, in such a manner that the connectible and disconnectable retarder continues to be connected if it has been determined that no adverse impact on the velocity development arises as a result thereof. If, on the other hand, it is determined that an adverse impact on the velocity development arises, that is to say that an extra/unnecessary energy cost Eₑₓₜᵣₐ arises, if the retarder remains connected, the retarder control device is arranged to disconnect the retarder.

Through the use of the present invention informed decisions may be made to control a connectible and disconnectable retarder. More specifically, informed decisions, which are founded on knowledge about the road section ahead, may be made to disconnect and/or connect the retarder Accordingly, decisions that result in desired trade-offs between retarder wear, driver comfort, fuel savings and braking action may be made. This is a considerable advantage compared to prior art solutions, which have made the same decisions regardless of the appearance of the road section ahead.

Generally, the fuel consumption may be reduced through the use of a connectible and disconnectable retarder, compared to fuel consumption that depends on drag losses in a fixedly connected retarder. The use of the knowledge about the road section ahead may further reduce fuel consumption, for example because disconnection of the retarder may take place immediately after a completed braking operation, if the knowledge about the road section ahead indicates that there is no need to brake on the road section ahead.

In addition, the knowledge about the road section ahead may be used to limit the number of connections of the retarder to only those occasions where it is really advantageous, from an energy and/or fuel point of view, to connect the retarder. Accordingly, the number of connections and disconnections is reduced when the present invention is used, but when connections actually do take place they are justified. This control of the retarder considerably reduces the wear, among others on the retarder's synchronising mechanism, and also results in a consistent control of the retarder, which may be easily and intuitively understood by the vehicle's driver.

### Brief list of figures

The invention will be illustrated in more detail below, along with the enclosed drawings, where similar references are used for similar parts, and where:
Figure 1 schematically shows an example vehicle in which the present invention may be implemented,
Figure 2 shows a flow chart for one embodiment of the present invention,
Figure 3 shows a schematic example of a driving mode,
Figure 4 schematically shows a control device.

### Description of preferred embodiments

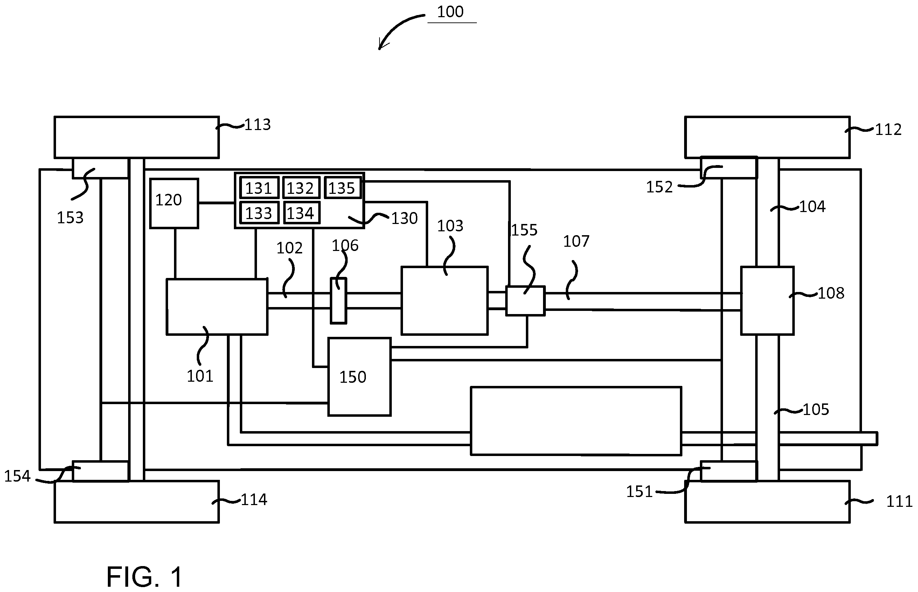

Fig. 1 schematically shows a vehicle 100, in which the present invention may be implemented. The vehicle 100 comprises a power-train. The powertrain comprises an engine 101, which in a customary manner, via an output shaft 102 on the engine 101, usually via a flywheel, is connected to a gearbox 103 via a clutch 106. The gearbox 103 is here illustrated schematically as one unit. However, the gearbox 103 may also physically consist of several cooperating gearboxes, for example a so-called range gearbox, a main gearbox and a split gearbox, which are arranged along the vehicle's powertrain.

The vehicle 100 further comprises drive shafts 104, 105, which are connected to the vehicle's driving wheels 111, 112, and which are operated by an output shaft 107 from the gearbox 103, via a shaft gear 108, such as a customary differential shaft 108. The vehicle 100 also comprises additional wheels 113, 114, which may be driving or non-driving, and may be arranged for control of the vehicle.

The vehicle 100 also comprises various different brake systems 150. The brake systems 150 may comprise a customary service brake system, which may e.g. consist of wheel brakes 151, 152, 153, 154 comprising brake discs and/or brake drums with associated brake pads, or similar, arranged in connection with the vehicle's wheels 111, 112, 113, 114. The brake system 150 may also comprise one or several auxiliary brakes, for example a brake 155 acting on the vehicle's powertrain, such as a connectible and disconnectable retarder.

A connectible and disconnectable retarder may comprise one or several of a primary retarder, placed between the engine and the gearbox, and a secondary retarder, placed after the gearbox, that is to say between the gearbox and the driving wheels. The connectible and disconnectable retarder 155, which acts on the powertrain, is here schematically drawn as though acting on the output shaft 107 of the gearbox. However, the connectible and disconnectable retarder 155 may be arranged substantially anywhere along the vehicle's powertrain, and may act substantially anywhere a braking effect may be achieved.

The retarder 155 is controlled by the control device 130, either directly, or through the above described braking system 150, and consists of a hydraulic or electric auxiliary brake, generating a braking force by way of preventing rotation of, for example, the output shaft 107 of the gearbox, with the assistance of for example a turbine.

The retarder 155 may be arranged to cooperate with the service braking system via the control device 150, and may among others be used to relieve the service braking system with the objective of reducing wear and tear, as well as the risk of overheating of the braking plates/brake pads 151-154. The vehicle 100 may also comprise other additional braking systems, such as an exhaust brake and/or an engine brake. Based on, for example, the driver's commands, control signals are sent to applicable system modules for request of desired braking force.

The connectible and disconnectable retarder 155 comprises a first part and a second part, which are not in engagement with each other when the retarder 155 is in a disconnected state. The retarder's first part and second part may for example be arranged in connection with the output shaft 107 of the gearbox, and may in certain embodiments consist of a stator and a rotor, respectively.

The connection of the retarder's two parts is controlled by the retarder's manoeuvring device, which consists of a mechanism to connect and disconnect, respectively, the two parts of the retarder. The manoeuvring device may comprise, or interact with, the above mentioned synchronising mechanism.

The connectible and disconnectable retarder 155 may be activated to provide a braking torque and deactivated, respectively, to interrupt the braking torque, for example by way of the cruise control 120 sending a control signal to the control device 130, for example when a maximum permitted speed vₘₐₓ has been reached or exceeded, if the cruise control is activated.

When the control device 130 has received a control signal to activate the retarder 155, a connection, and subsequently a following activation of the retarder 155, may be initiated.

Since one of the retarder's components in its disconnected state is at a standstill, or rotating freely while the second rotates with approximately the same speed as the shaft to be decelerated, a synchronising of the speed of these parts must be carried out, for example by way of using a synchronising mechanism. This may be done in a similar manner as at shifting in a gearbox, when the speeds of the respective cogwheels are synchronised at connection.

When the retarder's parts have been synchronised in terms of speed, the control device 130 may send a signal, which makes a manoeuvring device move, causing the first and second parts of the retarder to join and engage with each other. Thus, a rotatable connection between both parts of the retarder is established, and the retarder 155 is in a connected state.

Subsequently, the control device 130 and/or the braking system 150 may send a signal to an activation device, which may activate the braking function of the retarder 155 by pumping liquid into the same. The liquid which is used in the retarder may consist of a medium which is liquid at a working temperature and/or working pressure, such as oil, coolant, a mixture of glycol and water or similar.

The braking function in the retarder 155 is achieved by way of activation of the retarder's rotatable part, which may consist of a pumping wheel in a hydraulic retarder, or alternatively a rotor in an electric retarder. This may be activated by the activation device by forcing liquid into the rotatable part, which creates friction losses decelerating the shaft, for example the output shaft 107 of the gearbox. Accordingly, a braking action is achieved for the vehicle 100.

In some embodiments the retarder 155 may comprise a rotor and a stator comprising shovels that are inclined, for example approximately 45 degrees, in relation to the rotational plane. These may then jointly form an annular space in the form of a torus. Torus is a mathematical body, whose appearance may be compared to a doughnut. By forcing liquid into the torus when the rotor rotates, the rotor throws out liquid toward its outer diameter and thus into the stator. The stator leads the liquid back to the rotor, with the help of the shovels and its annular torus surface, but now to its inner diameter.

The rotor thus accepts liquid at the inner diameter axially and throws the liquid out at the outer diameter axially, but in the other direction. This re-linking of the liquid entails that the rotor is exposed to an axial force that wants to separate the rotor and the stator. Furthermore, the liquid is sent between the stator and the rotor in the direction of the shovels, for example 45 degrees, which means that a radial force is also obtained due to the re-linking of the liquid. This is the radial force that provides a braking torque on the rotor, and thus on the retarder 155. The flow from the inner diameter to the outer diameter of the rotor also results in additional braking torque. It is thus the flow of the liquid that results in a reaction force and thus a braking torque, which means that the higher the speed of the liquid, the higher the torque. The mechanic effect in the form of torque and rotational speed is thus converted into speeding up the liquid. The high speed of the liquid causes friction against all shovel surfaces and walls touched by the liquid, and heats up the liquid.

At activation of the retarder 155, the above mentioned torus must thus be filled with liquid, in order for the retarder to provide a braking force. This may for example be achieved by way of - when the manoeuvring device has provided an engagement - starting to fill up with liquid from the activation device, which may consist of a hydraulic pump or similar. The more liquid that is forced into the torus, the more the pressure on the inlet and outlet holes increases (bored channels in the stator). More liquid in the torus results in increased reaction forces on the rotor, and thus a higher braking torque.

When the braking with the retarder 155 has to be interrupted, as a consequence, for example, of a control signal from the control device 130 and/or from the braking system 150, the deactivation of the retarder 155 is ensured through the activation device, so that no braking torque is obtained.

When this has been achieved, the compression of the two parts of the retarder is interrupted. A return mechanism, for example in the form of a spring, such as a coil spring, leaf spring, ring spring, pneumatic spring, rubber suspension, hydraulic suspension or a similar machine element, then returns the manoeuvring device in a disconnecting direction to its disconnected state. Thus, the first part and the second part are separated, so that they are no longer engaged with each other.

The engine 101 may be controlled based on instructions from a cruise control 120, in order to maintain an actual vehicle speed and/or to vary the actual vehicle speed, for example so that an optimised fuel consumption is obtained within reasonable speed limits.

The vehicle 100 also comprises at least one control device 130, arranged to control a range of different functions in the vehicle, such as among others the engine 101, the braking systems 150, 155 and the gearbox 103.

As described in further detail below, the control device 130 in the system comprises, according to the present invention, at least one simulation device 131, a first determination device 132, a second determination device 133 and a retarder control device 134.

As a person skilled in the art will realise, the control device may also be installed to control one or several further devices in the vehicle, such as for example the clutch 106 (not displayed in the figure).

In the figure, the at least one control device 130 is drawn as being separate from the cruise control 120. However, the control device 130 and the cruise control 120 may exchange information with each other. The cruise control 120 and the control device 130 may also be logically separate, but physically implemented in the same unit, or may be logically and physically jointly arranged/implemented.

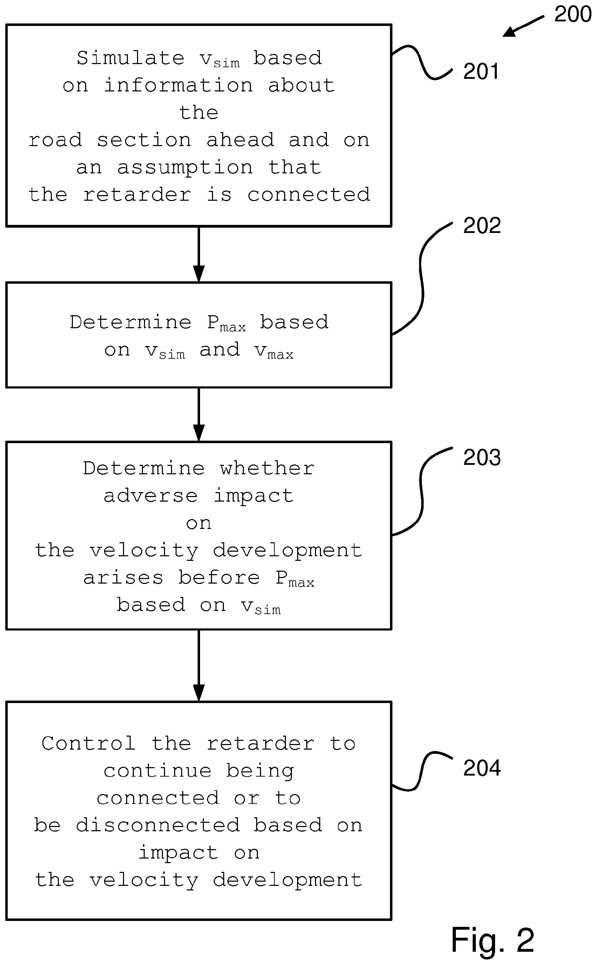

Figure 2 shows a flow chart for an embodiment of the present invention, where a control of a connectible and disconnectable retarder is provided. The connectible and disconnectable retarder is here initially connected and acts on the powertrain in a vehicle, for example on the output shaft 107 from the gearbox, as described above. For example, the method 200 may start after a completed braking operation carried out with the retarder, and when the retarder is still connected.

In a first step 201, at least one future velocity profile vₛᵢₘ for at least one respective actual vehicle speed v_{act} within a road section ahead of the vehicle is simulated, for example through the use of the above described simulation device 131. The simulation is based on information relating to the road section ahead, and assumes that the connectible and disconnectable retarder is connected during at least an initial part of the road section. According to one embodiment, this initial part of the road section extends from the simulation position Pₛᵢₘ described below, and at least to the below described first position Pₘₐₓ, which thus corresponds to the below described time period T_{to_max}.

In a second step 202, for example through the use of the above described first determining device 132, at least one respective first position Pₘₐₓ is determined, that is to say a first position Pₘₐₓ for each one of the at least one future velocity profiles vₛᵢₘ, where the at least one respective actual vehicle speed v_{act} will exceed a maximum permitted speed vₘₐₓ. The determination is here based upon the simulated at least one future velocity profile vₛᵢₘ and on the maximum permitted speed vₘₐₓ, for example through comparisons of the values for the at least one future velocity profile vₛᵢₘ with the maximum permitted speed vₘₐₓ. The first position Pₘₐₓ is according to one embodiment located within the road section for which the simulations are carried out.

In a third step 203, for example with the use of the above described second determining device 133, it is determined whether a velocity development for the vehicle will be adversely impacted in relation to the maximum permitted speed vₘₐₓ before the vehicle reaches the at least one respective first position Pₘₐₓ for each one of the at least one future velocity profiles vₛᵢₘ, if the connectible and disconnectable retarder 155 is connected. According to one embodiment of the present invention, the adverse impact corresponds to an extra energy cost Eₑₓₜᵣₐ, which does not depend on a braking requirement for the vehicle. The determination is here based on the at least one future velocity profile vₛᵢₘ.

In a fourth step 204, for example with the use of the above described retarder control device 134, the connectible and disconnectable retarder 155 is controlled based on the determination in the third step 203 of whether or not the adverse impact on the velocity development will arise. If it has been determined that no adverse impact arises with the retarder connected, it is controlled in such a manner that it continues to the connected. However, if it has been determined that there will arise an adverse impact if the retarder is connected, the connectible and disconnectable retarder is disconnected.

According to one embodiment of the present invention, the adverse change of the velocity development is defined by the size of the actual speed v_{act} over the distance from the position Pₛᵢₘ for the performance of the simulations to the first position Pₘₐₓ in relation to the maximum permitted speed vₘₐₓ, at which a braking requirement exists for the vehicle. Thus, if the size of the actual speed v_{act} differs relatively considerably from the maximum permitted speed vₘₐₓ from the position Pₛᵢₘ where the simulations are carried out until the maximum permitted speed vₘₐₓ is achieved, that is to say that the difference is greater than a difference threshold value, then the velocity development is deemed to be adversely impacted. This means, in such case, that the retarder's connection also contributes to a reduction of the vehicle's speed to an unnecessary extent during the distance between Pₛᵢₘ and Pₘₐₓ, to a speed which is relatively far below the maximum permitted speed vₘₐₓ. For example, an adverse impact on the velocity development may be identified if the actual speed's v_{act} size differs from the maximum permitted speed vₘₐₓ by more than 5-10 km/h and/or by more than 5-10 % of the maximum permitted speed vₘₐₓ over the distance between Pₛᵢₘ and Pₘₐₓ. In other words, the difference threshold value may for example have the value 5-10 km/h or 5-10 % of the maximum permitted speed vₘₐₓ.

As specified above, one or several future velocity profiles vₛᵢₘ are thus simulated. Each one of these one or several future velocity profiles vₛᵢₘ corresponds to an actual vehicle speed v_{act}. For each one of these one or several future velocity profiles vₛᵢₘ a first position Pₘₐₓ is determined. That is to say, after the simulations there may be several sets of velocity profiles vₛᵢₘ, actual vehicle speeds v_{act} and first positions Pₘₐₓ, determined according to the present invention.

By using a connectible and disconnectable retarder, the drag losses in a fixedly connected retarder are thus reduced, which drag losses are caused by the fact that the fixedly connected retarder's mobile parts always spin with the shaft, which sometimes has to be decelerated.

Through the use of the present invention, the control of the connectible and disconnectable retarder may be based on knowledge about the road section ahead, which results in informed decisions for the control. For example, when the present invention is used, the retarder may be disconnected immediately after a completed deceleration, if too much energy is required to keep it connected before the next occasion when a braking requirement arises again, which reduces fuel consumption since the vehicle rolls more easily with the retarder disconnected. The braking requirement during the road section ahead may be reliably determined based on the one or several simulated velocity profiles vₛᵢₘ.

By basing decisions on knowledge about the road section ahead, the number of connections and disconnections of the retarder may also be limited to only those occasions when it is really advantageous, from an energy and/or fuel point of view, to connect and disconnect, respectively, the retarder. In other words, the number of connections and disconnections is reduced when the present invention is used, but when connections and disconnections actually do take place they are justified.

The present invention therefore results in a control of the retarder's connection and disconnection, which may be intuitively understood by the driver. Accordingly, an inconsistent and indecisive control of the retarder, comprising a larger number of consecutive connections and disconnections, respectively, of the retarder, is also avoided.

Limiting the number of connections and disconnections of the retarder through the use of the present invention has an added advantage, in that the above said wear of the retarder, for example of the retarder's synchronising mechanism, is considerably reduced.

It takes a relatively long time, namely the preparation period T_{retarder_ready}, described below, to prepare a disconnected retarder for providing braking action to brake the vehicle. When the retarder is connected, on the other hand, it is relatively quick to activate the retarder so that a braking action is obtained. Accordingly, the present invention entails, in total, shorter delays connected to retarder braking of the vehicle, since the retarder will be connected more often than in prior art solutions when it has to be activated. In other words, in many situations the retarder only needs to be activated when the present invention is used, while the retarder with prior art technology in similar situations would often first need to be connected and subsequently activated.

As described above, the control of the connectible and disconnectable retarder 155 is based on whether the vehicle's velocity development will be adversely impacted in relation to the maximum permitted speed vₘₐₓ, from the position Pₛᵢₘ where the simulations are carried out until the maximum permitted speed vₘₐₓ is reached in the position Pₘₐₓ. This may also be expressed as though the control of the connectible and disconnectable retarder 155 may be based on whether or not an extra energy cost Eₑₓₜᵣₐ will arise between the positions Pₛᵢₘ and Pₘₐₓ. This extra energy cost Eₑₓₜᵣₐ corresponds to an energy cost that is not justified by the braking requirement for the vehicle, since the velocity development is adversely impacted in relation to the speed at which the braking is started, that is to say in relation to the maximum permitted speed vₘₐₓ. In other words, the adverse impact and/or extra energy cost Eₑₓₜᵣₐ constitutes an unnecessary energy cost, that is to say an energy loss, which may be wasted through a non-optimal control of the connection and disconnection of the retarder 155. This extra/unnecessary/unfounded/disadvantageous speed impact and/or energy cost Eₑₓₜᵣₐ thus differs from the necessary/justified/advantageous speed impact and/or energy cost E_{brake}, which must be accepted in order to brake the vehicle when braking is required, for example in order not to exceed the maximum permitted speed vₘₐₓ.

There are a number of ways to determine whether a disadvantageous speed impact and/or an extra energy cost Eₑₓₜᵣₐ arises. According to one embodiment of the present invention, this determination is based on supply of fuel to the engine 101 in the vehicle. If fuel needs to be supplied to the engine 101 before the vehicle reaches the first position Pₘₐₓ, this is interpreted as an indication that an extra/unnecessary energy cost Eₑₓₜᵣₐ and/or a disadvantageous speed impact arises, since fuel would then be unnecessarily consumed to achieve a desired vehicle speed at the same time as the retarder would be connected, which results in drag losses that decelerate the vehicle. In other words, two counteracting forces would impact the vehicle, a driving force created by the combustion of fuel and a decelerating force created by the retarder, which obviously leads to a waste of the energy created by the fuel before the first position Pₘₐₓ is reached. When it is determined that an extra/unnecessary energy cost Eₑₓₜᵣₐ and/or a disadvantageous speed impact thus arises, the retarder is thus controlled to be disconnected with the help of the retarder control device 134.

If no fuel needs to be supplied to the engine 101 before the vehicle reaches the first position Pₘₐₓ, this is interpreted as an indication that no extra/unnecessary energy cost and/or no disadvantageous speed impact arises with the retarder connected, so that the retarder, with the help of the retarder control device 134, is controlled to continue being connected.

According to one embodiment, the determination about the supply of fuel to the engine is based on information provided by the cruise control 120 in the vehicle. The cruise control 120 indirectly controls the fuel supply to the engine by requesting reference speeds v_{ref} from the engine system, which are in turn converted to fuel quantities that need to be supplied to the engine to result in an actual vehicle speed v_{act}, corresponding to the reference speed v_{ref}. The cruise control may therefore easily and with insignificant added complexity provide information that may be used to determine the arising of disadvantageous speed impact and/or of extra energy Eₑₓₜᵣₐ.

According to one embodiment of the present invention, the determination of the supply of fuel to the engine is based on calculations analysing the one or several simulated velocity profiles vₛᵢₘ and road sections up to the first position Pₘₐₓ.

According to one embodiment, the determination of the appearance of a disadvantageous speed impact and/or of an extra energy cost Eₑₓₜᵣₐ is based on a determined actual average speed v_{act_av} for the vehicle. This embodiment may be used, for example at manual speed control, also referred to as pedal driving, of the vehicle. The actual average speed may for example be determined over a time period Tₐᵥ, when the vehicle is driven. If the vehicle's actual vehicle speed v_{act} obtains a value lower than this determined average vehicle speed v_{act_av} during the road section before the vehicle reaches the first position Pₘₐₓ, then this is interpreted by the system as though the connected retarder causes a disadvantageous speed impact and/or an extra/unnecessary energy cost Eₑₓₜᵣₐ. If a disadvantageous speed impact and/or an extra energy cost Eₑₓₜᵣₐ is thus determined, the retarder is controlled with the help of the retarder control device 134 to be disconnected. If, for example, the vehicle has been driven at a speed of 90 km/h for a relatively long time, in order subsequently to drop to 80 km/h from the vehicle's current position Pₛᵢₘ where the simulations are carried out to the first position Pₘₐₓ, then this is interpreted as though the connected retarder causes a disadvantageous speed impact and/or an unnecessary energy cost Eₑₓₜᵣₐ. If it is determined that no disadvantageous speed impact and no extra energy cost arises, then the retarder is controlled, instead, to continue being connected.

According to one embodiment, the determination of the appearance of a disadvantageous speed impact and/or an extra energy cost Eₑₓₜᵣₐ is based on a time T_{to_max} that will be required for the vehicle to reach the first position Pₘₐₓ from a position Pₛᵢₘ, where the simulations are carried out. The idea here is to determine how long the retarder will be connected before the speed reducing braking is required at the first position Pₘₐₓ. At the same time, information is also obtained about how the vehicle's speed development is impacted, since the time T_{to_max} depends on the actual vehicle speed v_{act}. If the time/time period T_{to_max} becomes long, the drag losses also become relatively large, because the connected retarder's parts rotate with the shaft that needs to be decelerated, which means that the disadvantageous speed impact and/or the extra energy cost Eₑₓₜᵣₐ may be confirmed. If this time T_{to_max} exceeds a time threshold value T_{to_max_lim}; T_{to_max} > T_{to_max_lim}; it is therefore determined that a disadvantageous speed impact and/or an extra/unnecessary energy cost Eₑₓₜᵣₐ has arisen, so that the retarder is controlled to be disconnected. If this time T_{to_max} is instead equal to or less than the time threshold value T_{to_max_lim}; T_{to_max} ≤ T_{to_max_lim}; then this is interpreted as though no disadvantageous speed impact and/or no extra/unnecessary energy cost Eₑₓₜᵣₐ arises, so that the retarder 155 is controlled to continue being connected.

The maximum allowed speed vₘₐₓ may depend on one or several parameters, for example a constant speed brake speed v_{dhsc} determined for the vehicle, a distance to at least one vehicle ahead, a road gradient for the road section, a curvature for the road section, a speed limit for the road section and/or a limitation of accessibility for the road section, such as a traffic jam or accident.

If the vehicle is driven with pedal driving for control of the vehicle speed, the maximum permitted speed vₘₐₓ may, for example, be 5 km/h higher than a current vehicle speed. Alternatively, the system at pedal driving may adaptively learn at which vehicle speed the driver usually brakes the vehicle, and use this adaptive braking speed as a maximum permitted speed vₘₐₓ.

Knowledge about the road section ahead, which according to the present invention is used, for example, at the simulation 201 of the at least one future velocity profile vₛᵢₘ for the road section ahead of the vehicle, may e.g. consist of knowledge about prevailing topography, curvature, traffic situation, road works, traffic intensity and road condition. Further, the knowledge may consist of a speed limit for the road section ahead, and/or of a traffic sign in connection with the road. This knowledge may for example be obtained with positioning information, such as e.g. GPS-information (Global Positioning System-information), information obtained from one or several of GNSS (Global Navigation Satellite System), GLONASS, Galileo and Compass, or information obtained from a relative positioning system using optical sensors, map information and/or topographical information, weather reports, information communicated between different vehicles and information communicated via wireless communication, such as for example radio. Information about vehicles ahead may also be comprised in the knowledge about the road section ahead, so that, for example, radar and/or camera equipment may be used to determine the information about vehicles ahead and the position of the proprietary vehicle.

This knowledge may be used in many ways. According to the present invention, knowledge may be used when predicting whether a braking process will occur. Knowledge about a future downhill slope may, for example, be used to estimate the future braking requirement during the downhill slope. Similarly, for example, knowledge about a future speed limit for the road may also be used to achieve reductions of speed before a future lower speed limit. Similarly, knowledge about a road sign with information about, for example, a future roundabout or junction may also be used to predict braking before the roundabout or junction.

Also at connection of the retarder when it has been disconnected, for example when the connection that provides the initial connection of the retarder, existing when the first step 201 of the method is carried out, or at another connection of the retarder, information about the road section ahead, the one or several simulated velocity profiles vₛᵢₘ and/or a first respective position Pₘₐₓ, where the simulated velocity profiles exceed the maximum permitted speed vₘₐₓ, is used The information about the road section ahead, the one or several simulated velocity profiles vₛᵢₘ and/or a first respective position Pₘₐₓ is here determined in a similar manner as at the control of the disconnection of the retarder 155 described herein.

This method and/or this system for control of connection of the retarder according to one embodiment of the invention, thus does not necessarily need to be limited to use in connection with the disconnection of the retarder according to the independent claims.

According to the embodiment of the present invention, the retarder 155 is connected before the vehicle has to be decelerated, that is to say before the braking requirement for the vehicle arises, for example when the vehicle reaches the first position Pₘₐₓ, at which the braking requirement arises because the maximum permitted speed vₘₐₓ is exceeded. The connection which is brought forward in time shortens the activation time and quickens the response time for the retarder braking.

According to one embodiment of the present invention, the connectible and disconnectable retarder 155 is connected at a connecting time t_{retarder_start}, corresponding to a connecting position P_{retarder_in_invention} described below, before the braking requirement arises, for example a connection time period T_{retarder_start} before the vehicle reaches the first position Pₘₐₓ. The connection time period T_{retarder_start} is here related to a preparation time period T_{retarder_ready}, which is required to prepare a disconnected retarder for braking from its disconnected state.

The connection of the retarder is carried out through the use of the above described manoeuvring device, which consists of a mechanism to connect and disconnect, respectively, the two parts in the retarder.

The manoeuvring device is usually controlled through the use of one or several actuators. These actuators may for example be hydraulic, pneumatic and/or electrically driven/activated/controlled. Hydraulic actuators require a hydraulic activation time to achieve the desired movements. Pneumatic actuators, that is to say actuators operated by compressed air, require a period of inflation to achieve the desired movement. Electrical actuators require a calculation and/or embodiment time to achieve the desired movement of the actuator. Accordingly, a control time/actuation time period Tact is required for the respective actuators before they begin to move, where such control time/actuation time period Tact comprises one or several of the above mentioned hydraulic activation time, inflation time, and calculation and/or embodiment time.

Additionally, the retarder's different parts must be synchronised, as described above, which requires a synchronisation time T_{syn}. The preparation time period T_{retarder_ready} thus comprises at least the control time/actuation time period Tact and the synchronisation time period T_{syn;} T_{retarder_ready} = T_{act} + T_{syn}.

According to one embodiment of the present invention, the connecting time period T_{retarder_start} is longer than the preparation time period T_{retarder_ready}; T_{retarder_start} > T_{retarder_ready}. This ensures that the retarder is ready to brake the vehicle when the braking requirements arises, for example at the first position Pₘₐₓ.

According to one embodiment, the connection time period T_{retarder_start} is equal to the preparation time period T_{retarder_ready} plus a marginal time T_{margin}; T_{retarder_start} = T_{retarder_ready} + T_{margin}. Such marginal time T_{margin} must here be given a relatively small value. This is to prevent that there is sufficient time for the driving situation to change during the connecting time period T_{retarder_start}, so that a connection is no longer justified. If, for example, the marginal time T_{margin} is sufficiently long for the driving situation to change during the connecting time period T_{retarder_start}, so that the retarder would not need to be connected, then the excessively long marginal time T_{margin} has resulted in a disadvantageous speed impact and/or an extra/unnecessary energy cost Eₑₓₜᵣₐ, since the retarder was connected unnecessarily. A non-limiting example of the marginal time T_{margin} may be 2 seconds.

Thus, the connecting time period T_{retarder_start} must be sufficiently long for the connection of the retarder to begin, so that it may be completed before the braking requirement arises, but sufficiently short for the conditions, such as for example the driving situation, for the connection of the retarder to remain substantially unchanged.

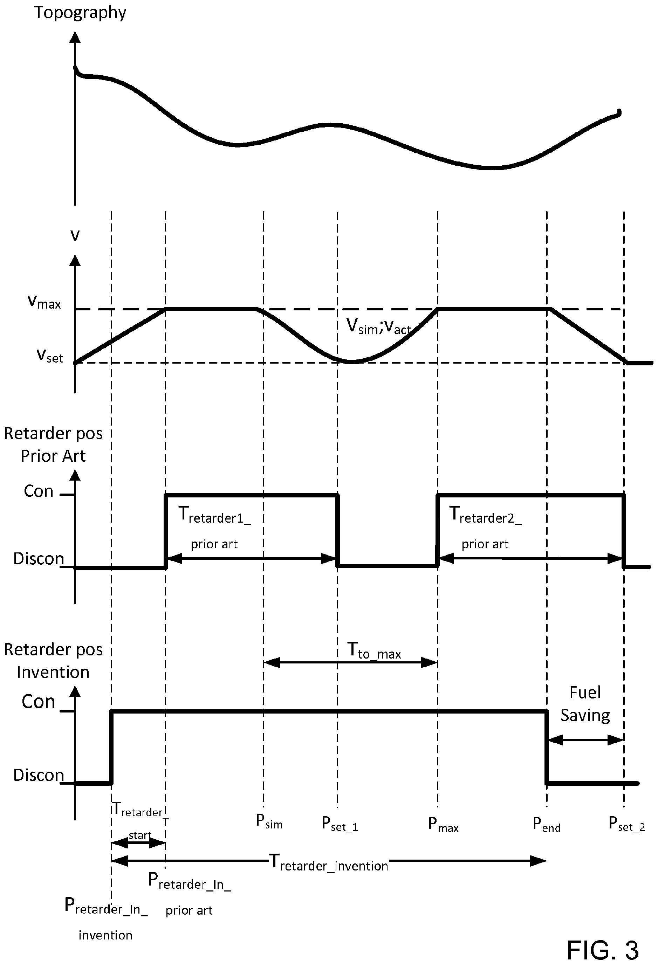

Figure 3 illustrates schematically a driving case, which may occur for example for a topography according to the top curve, comprising at least one downhill slope, in this non-limiting example two downhill slopes separated by a small uphill slope.

The second top curve in Figure 3 shows how the simulated vehicle speed vₛᵢₘ and/or the actual vehicle speed v_{act} may appear in a driving case, where a vehicle is travelling on a road with the topography according to the top curve. A set speed vₛₑₜ may, for example, be set for the cruise control and a maximum permitted speed vₘₐₓ may be defined. Since the simulations of the vehicle speed according to the present invention may be very accurate, the actual vehicle speed v_{act} and the simulated vehicle speed vₛᵢₘ will have substantially the same values, as shown in Figure 3.

The second curve from the bottom shows the retarder's position, that is to say connected ("Con.") or disconnected ("Discon."), when the retarder is controlled according to prior art technology.

The bottom curve shows the retarder's position, that is to say connected ("Con.") or disconnected ("Discon."), when the retarder is controlled according to the present invention.

According to prior art technology, shown in the second curve from the bottom, the retarder has been controlled based on the vehicle's speed, that is to say that prior art systems have substantially looked at the speed experienced at this occasion by the vehicle, and then tried to control e.g. braking measures based on this current speed. When the vehicle enters the downhill slope, the actual vehicle speed v_{act} increases, so that it exceeds the maximum permitted speed vₘₐₓ at a position P_{retarder_in_prior art}. When the maximum permitted speed vₘₐₓ has been exceeded, that is to say at the position P_{retarder_in_prior art}, the connection of the retarder 155 is initiated with prior art technology, in order to subsequently facilitate braking of the vehicle with the retarder.

After the retarder has braked away a certain amount of energy and/or if the vehicle reaches an uphill slope, the actual vehicle speed v_{act} will drop below the maximum permitted speed vₘₐₓ. After a while, the actual vehicle speed v_{act} has dropped to the set speed vₛₑₜ, so that fuel again is injected into the engine. At this position P_{set_1} the retarder is disconnected with the use of the prior art control. Here, the retarder will thus be connected during a first relatively brief retarder time period T_{retarder1_prior art}. When the actual vehicle speed v_{act} at the point in time Pₘₐₓ again exceeds the maximum permitted speed vₘₐₓ, the prior art control will connect the retarder again, and subsequently disconnect the retarder, when the actual vehicle speed v_{act} again drops to the set speed vₛₑₜ, so that fuel again is injected into the engine at the position P_{set_2}. Thus, the retarder will here be connected also during a second, relatively brief retarder time period T_{retarder2_prior art}.

According to the present invention the system will, at the end of the first downhill slope, at the position Pₛᵢₘ, carry out the simulation of the vehicle speed vₛᵢₘ, based on information about the road section ahead, as described above. The simulation also assumes that the retarder is connected at least initially, that is to say during an initial part of the road section, for example at least up to the position Pₘₐₓ, or up to the below described position P_{end}. Thus, the system according to the present invention may with great accuracy determine the position Pₘₐₓ, at which the simulated vehicle speed vₛᵢₘ will exceed the maximum permitted speed again. The system may also determine whether a disadvantageous speed impact and/or an extra/unnecessary energy cost Eₑₓₜᵣₐ will arise if the retarder is connected between the simulation position Pₛᵢₘ and the position Pₘₐₓ. As described above, it may here be calculated e.g. whether fuel will need to be injected into the engine before the position Pₘₐₓ and/or the time T_{to_max} required until the maximum permitted speed vₘₐₓ is again exceeded. Based, for example, on one or several of these calculations, it is then determined whether a disadvantageous speed impact and/or an extra/unnecessary energy cost Eₑₓₜᵣₐ is required during the time period T_{to_max} if the retarder remains connected.

If the determination results in a confirmation that no disadvantageous speed impact and/or no unnecessary/extra energy cost Eₑₓₜᵣₐ will be required to have the retarder connected, for example since no fuel will need to be injected into the engine, and/or if the time period T_{to_max} is sufficiently brief, the control according to the present invention will allow the retarder to continue to be connected, even after the simulation position Pₛᵢₘ. In the example illustrated in Figure 3, it is determined that the time T_{to_max} ≤ T_{to_max_lim}, and that no fuel will need to be injected during the time period T_{to_max}, which means that no disadvantageous speed impact and/or no extra/unnecessary energy cost Eₑₓₜᵣₐ will be required.

Accordingly, the control according to the present invention will allow the retarder 155 to be connected up to a position P_{end}, at which the simulated vehicle speed vₛᵢₘ drops below the maximum allowed speed vₘₐₓ again, in order not to subsequently reach up to the maximum permitted speed vₘₐₓ for a relatively long period afterwards. Accordingly, when the present invention is used, the retarder's connection does not need to be disconnected only because the simulated vehicle speed vₛᵢₘ temporarily drops below vₘₐₓ, and/or drops to the set-speed vₛₑₜ during the time period T_{to_max}. Thus, a longer and uninterrupted connection T_{retarder_invention} of the retarder is obtained, which results in a consistent and less indecisive connection of the retarder. The present invention also results in the advantage that wear of the retarder's manoeuvring device, synchronising mechanism and other components inside the retarder becomes less, since fewer connections and disconnections, respectively, of the retarder are carried out.

As displayed in Figure 3, the present invention also has the advantage that the retarder may be disconnected directly when the braking requirement ends, that is to say at the position P_{end}, when the actual speed v_{act} drops below the maximum permitted speed vₘₐₓ. This results in a fuel saving between the positions P_{end} and P_{set_2} for the present invention, compared with prior art technology, since the prior art technology disconnects the retarder first at the later position P_{set_2}.

According to certain embodiments of the present invention, the retarder is also connected through the control according to the present invention before the braking requirement arises, that is to say before the position P_{retarder_in prior art} at which the retarder is connected with prior art technology, which further extends the period T_{retarder_invention}, during which the retarder is connected. This is illustrated schematically in the figure as though the retarder according to the present invention is connected at a position P_{retarder_in_invention}, so that the vehicle passes a connecting time period T_{retarder_start} before it reaches the position P_{retarder_in prior art}, where prior art technology would have connected the retarder. According to different embodiments, the connecting time period T_{retarder_start} may have different durations, as described above. The connecting time period T_{retarder_start} is often granted a sufficiently long time for the retarder to be prepared for the connection/deceleration, but also a sufficiently short time, in order that the conditions for the connection do not change during the connecting time period T_{retarder_start}. Accordingly, the retarder will be connected for a long time period T_{retarder_invention}, which is considerably longer than a total duration for the two periods T_{retarder1_prior art} and T_{retarder2_prior art}, when the retarder would have been connected with control according to prior art technology. Additionally, this considerably longer period T_{retarder_invention} remains uninterrupted, which reduces the wear on the retarder.

A person skilled in the art will realise that a method to control a connectible and disconnectable retarder according to the present invention may also be implemented in a computer program, which when executed in a computer will cause the computer to carry out the method. The computer program usually consists of a part of a computer program product 403, where the computer program product comprises a suitable nonvolatile/permanent/persistent/durable digital storage medium on which the computer program is stored. Said nonvolatile/permanent/persistent/durable computer readable medium consists of a suitable memory, e.g.: ROM (Read-Only Memory), PROM (Programmable Read-Only Memory), EPROM (Erasable PROM), Flash, EEPROM (Electrically Erasable PROM), a hard disk device, etc.

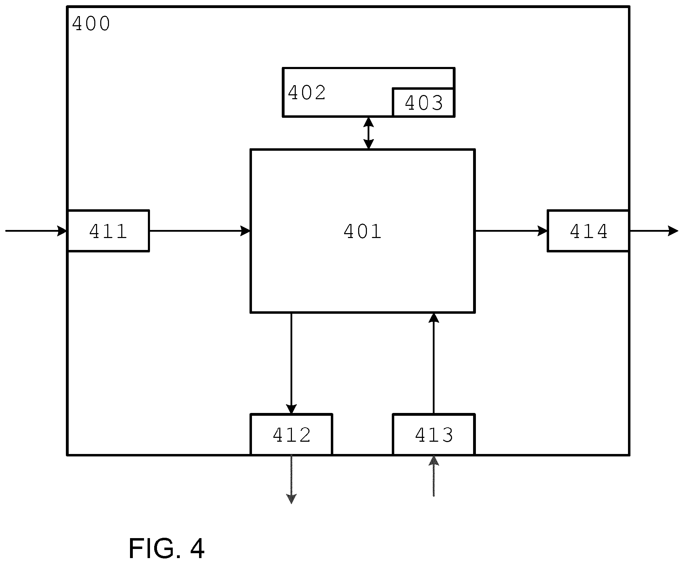

Figure 4 schematically shows a control device 400. The control device 400 comprises a calculation device 401, which may consist of essentially a suitable type of processor or microcomputer, e.g. a circuit for digital signal processing (Digital Signal Processor, DSP), or a circuit with a predetermined specific function (Application Specific Integrated Circuit, ASIC). The calculation device 401 is connected to a memory unit 402 installed in the control device 400, providing the calculation device 401 with e.g. the stored program code, and/or the stored data which the calculation device 401 needs in order to be able to carry out calculations. The calculation device 401 is also set up to store interim or final results of calculations in the memory device 402.

Further, the control device 400 is equipped with devices 411, 412, 413, 414 for receiving and sending of input and output signals. These input and output signals may contain wave shapes, pulses or other attributes, which may be detected as information by the devices 411, 413 for the receipt of input signals, and may be converted into signals that may be processed by the calculation device 401. These signals are then provided to the calculation device 401. The devices 412, 414 for sending output signals are arranged to convert the calculation result from the calculation unit 401 into output signals for transfer to other parts of the vehicle's control system, and/or the component(s) for which the signals are intended.

Each one of the connections to the devices for receiving and sending of input and output signals may consist of one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation device 401, and that the above-mentioned memory may consist of the memory device 402.

Generally, control systems in modern vehicles consist of a communications bus system, consisting of one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown thus often comprise significantly more control devices than shown in Figures 1 and 4, as is well known to a person skilled in the art within the technology area.

The present invention, in the embodiment displayed, is implemented in the control device 400. The invention may, however, also be implemented wholly or partly in one or several other control devices, already existing in the vehicle, or in a control device dedicated to the present invention.

According to one aspect of the present invention a system is provided, which is arranged for control of a connectible and disconnectable retarder 155. As described above for the method, the connectible and disconnectable retarder 155 is initially connected, and thus acts on a powertrain in a vehicle 100, in order to brake the vehicle 100.

The system comprises the above mentioned simulation device 131. The simulation device 131 is arranged for simulation of at least one future velocity profile ᵥsim for at least one respective actual vehicle speed v_{act} within a road section ahead of the vehicle 100. As described above, the simulation is based on information relating to the road section ahead, and assumes that the connectible and disconnectable retarder 155 is connected during at least an initial part of the road section. For example, the simulations may be based on positioning information and map data, and/or on information created in the vehicle, such as through the use of cameras or other sensors.

The system also comprises the above mentioned first determining device 132. The first determining device is arranged to determine at least one respective first position Pₘₐₓ, at which at least one respective first position Pₘₐₓ the at least one respective actual vehicle speed v_{act} will exceed a maximum permitted speed vₘₐₓ. The first determining device 132 is arranged to determine the at least one respective first position Pₘₐₓ, based on the at least one simulated future velocity profile vₛᵢₘ, which corresponds to the actual vehicle speed v_{act}, as described above.

The system also comprises the above mentioned second determining device 133. The second determining device is arranged to determine whether a velocity development for the vehicle will be adversely impacted in relation to the maximum permitted speed vₘₐₓ before the vehicle 100 reaches the at least one respective first position Pₘₐₓ, if the connectible and disconnectable retarder 155 is connected. The second determining device 133 is arranged to base this determination on the at least one future velocity profile vₛᵢₘ. The determination of whether or not this adverse impact on the velocity development for the vehicle arises, may, as described above, be carried out in a number of different ways, according to different embodiments of the present invention.

The system also comprises the above mentioned retarder control device 134. The retarder control device 134 is arranged to control the connectible and disconnectable retarder 155, so that the connectible and disconnectable retarder 155 continues to be connected, if it has been determined that no adverse impact on the velocity development arises as a result thereof. That is to say, if no extra/unnecessary energy Eₑₓₜᵣₐ is required to have the retarder connected, the retarder control device is arranged to control the retarder 155 so that it continues being connected. If on the other hand it is determined that an adverse impact on the velocity development arises if the retarder remains connected, the retarder control device is arranged to control the retarder 155 to disconnect the retarder 155.

The system according to the present invention may be arranged to perform all of the method embodiments described above and in the claims, so that the system for the respective embodiments obtains the above described advantages for the respective embodiments.

A person skilled in the art will also realise that the above system may be modified according to the different embodiments of the method according to the invention. In addition, the invention relates to a motor vehicle 100, for example a truck or a bus, comprising at least one system for control of a connectible and disconnectable retarder.

Here, and in this document, devices are often described as being arranged to carry out steps in the method according to the invention. This also comprises that the devices are adapted and/or set up to carry out these method steps.

Positions and times specified in this document have equivalents in times/time periods and positions/distances, respectively, among others according to correlations between distances, times and speeds which are familiar to a person skilled in the art. Thus, positions/distances may be replaced with corresponding times/time periods within the framework of the innovative idea. Similarly, times/time periods may be replaced with positions/distances within the framework of the innovative idea.

The present invention is not limited to the embodiments of the invention described above, but relates to and comprises all embodiments within the scope of the enclosed independent claims.

## Claims

1. Method to control a connectible and disconnectable retarder (155), when said connectible and disconnectable retarder (155) is initially connected and acts on a powertrain in a vehicle (100); **characterised in**:
- simulation (201) of at least one future velocity profile vₛᵢₘ for at least one respective actual vehicle speed v_{act} during a road section ahead of a vehicle (100), wherein said simulation is based on information related to said road section and assumes that said connectible and disconnectable retarder (155) is connected for at least an initial part of said road section;
- determination (202), based on said at least one future velocity profile vₛᵢₘ, of at least one respective first position Pₘₐₓ, at which said at least one first position Pₘₐₓ said at least one respective actual vehicle speed v_{act} will exceed a maximum permitted speed vₘₐₓ;
- determination (203) based on said at least one future velocity profile vₛᵢₘ, of whether a velocity development for said vehicle will be adversely impacted in relation to said maximum permitted speed vₘₐₓ before said velocity profile (100) reaches said at least one first position Pₘₐₓ, if said connectible and disconnectable retarder (155) is connected; and
- control (204) of said connectible and disconnectable retarder (155), wherein said connectible and disconnectable retarder (155) continues being connected, if it has been determined that no adverse impact on said velocity development thus arises, and wherein said connectible and disconnectable retarder (155) is disconnected, if it has been determined that an adverse impact on said velocity development thus arises.

2. Method according to claim 1, wherein said adverse impact on said velocity development results in an actual vehicle speed v_{act}, which differs from said maximum permitted speed vₘₐₓ by a value in the group:
- 5 - 10 km/h; and
- 5 - 10% of the maximum permitted speed vₘₐₓ.

3. Method according to any of claims 1-2, wherein said adverse impact on said velocity development is determined to arise, if fuel needs to be supplied to an engine (101) in said vehicle before said vehicle reaches said first position Pₘₐₓ.

4. Method according to claim 3, wherein said determination of whether the supply of said fuel to said engine occurs, is based on information provided by a cruise control (120) arranged in said vehicle (100).

5. Method according to any of claims 1-4, wherein said adverse impact on said velocity development is determined to arise, if said actual vehicle speed v_{act} obtains a value below a determined average vehicle speed v_{act_av} before said vehicle reaches said first position Pₘₐₓ.

6. Method according to any of claims 1-5, wherein said adverse impact on said velocity development is determined to arise, if a time T_{to_max}, which is required for said vehicle (100) to reach said first position Pₘₐₓ, exceeds a time threshold value T_{to_max_lim}; T_{to_max} > T_{to_max_lim}.

7. Method according to any of claims 1-6, wherein said connectible and disconnectable retarder (155), after said connectible and disconnectable retarder (155) has been disconnected, is connected before a braking requirement arises for said vehicle.

8. Method according to claim 7, wherein said connectible and disconnectable retarder (155) is connected one connection time period T_{retarder_start} before said braking requirement arises for said vehicle, wherein said connecting time period T_{retarder_start} is related to a preparation time period T_{retarder_ready}, which is required to prepare a disconnected retarder for braking.

9. Method according to claim 8, wherein said connecting time period T_{retarder_start} is longer than said preparation time period T_{retarder_ready}; T_{retarder_start} > T_{retarder_ready}.

10. Method according to any of claims 8-9, wherein said connecting time period T_{retarder_start} is equal to said preparation time period T_{retarder_ready} plus a marginal time T_{margin}; T_{retarder_start} = T_{retarder_ready} + T_{margin}; wherein said marginal time T_{margin} has a value which is sufficiently small to substantially avoid an adverse impact on said velocity development, due to a changed driving situation before said connecting time period T_{retarder_start}.

11. Method according to any of claims 1-10, wherein said maximum allowed speed vₘₐₓ is related to one from among the group of:
- a constant speed brake speed v_{dhsc} for said vehicle (100);
- a distance to at least one vehicle ahead;
- a road gradient for said road section;
- a curvature for said road section;
- a speed limit for said road section; and
- a limitation of accessibility for said road section.

12. Method according to any of claims 1-11, wherein said information relating to said road section comprises a road gradient, which is determined based on some information in the group of:
- positioning information combined with map data;
- radar based information;
- camera based information;
- information obtained from another vehicle than said vehicle;
- road gradient information and positioning information stored previously in the vehicle; and
- information obtained from traffic systems relating to said road section.

13. A computer program comprising a program code which, when said program code is executed in a computer, achieves that said computer carries out the method according to any of the claims 1-12.

14. Computer program product comprising a computer-readable medium and a computer program according to claim 13, said computer program being comprised in said computer-readable medium.

15. System for control of a connectible and disconnectable retarder (155), wherein said connectible and disconnectable retarder (155) is initially connected and acts on a powertrain in a vehicle (100); **characterised in**:
- a simulation device (131), arranged for simulation of at least one future velocity profile vₛᵢₘ for at least one respective actual vehicle speed v_{act} during a road section ahead of a vehicle (100), wherein said simulation is based on information related to said road section and assumes that said connectible and disconnectable retarder (155) is connected for at least an initial part of said road section;
- a first determining device (132), arranged for determination based on said at least one future velocity profile vₛᵢₘ, of at least one respective first position Pₘₐₓ, at which said at least one first position Pₘₐₓ said at least one respective actual vehicle speed v_{act} will exceed a maximum permitted speed vₘₐₓ;
- a second determining device (133), arranged for determination based on said at least one future velocity profile vₛᵢₘ, of whether a velocity development for said vehicle will be adversely impacted in relation to said maximum permitted speed vₘₐₓ before said vehicle (100) reaches said at least one first position Pₘₐₓ, if said connectible and disconnectable retarder (155) is connected; and
- a retarder control device (134), arranged for control of said connectible and disconnectable retarder (155), wherein said connectible and disconnectable retarder (155) continues to be connected, if it has been determined that no adverse impact on said velocity development thus arises,, and wherein said connectible and disconnectable retarder (155) is disconnected, if it has been determined that an adverse impact on said velocity development thus arises.

## Patentansprüche

1. Verfahren zum Steuern eines zu- und abschaltbaren Retarders (155), wobei der zu- und abschaltbare Retarder (155) zunächst zugeschaltet ist und auf einen Antriebsstrang in einem Fahrzeug (100) wirkt; **gekennzeichnet durch**:
- Simulieren (201) wenigstens eines zukünftigen Geschwindigkeitsprofils vₛᵢₘ für wenigstens eine entsprechende Fahrzeug-Istgeschwindigkeit v_{act} während einem vorausliegenden Streckenabschnitt eines Fahrzeugs (100), wobei das Simulieren auf einer Information basiert, die den Streckenabschnitt betrifft, und annimmt, dass der zu- und abschaltbare Retarder (155) für einen anfänglichen Teil des Streckenabschnitts zugeschaltet ist;
- Bestimmen (202) von wenigstens einer entsprechenden ersten Position Pₘₐₓ auf einer Grundlage des wenigstens einen zukünftigen Geschwindigkeitsprofils vₛᵢₘ, an der die wenigstens eine erste Position Pₘₐₓ der wenigstens einen entsprechenden Fahrzeug-Istgeschwindigkeit v_{act} eine maximal zulässige Geschwindigkeit vₘₐₓ überschreiten wird;
- Bestimmen (203) auf der Grundlage wenigstens eines zukünftigen Geschwindigkeitsprofils vₛᵢₘ, ob eine Geschwindigkeitsentwicklung für das Fahrzeug in Verbindung mit der maximal zulässigen Geschwindigkeit vₘₐₓ negativ beeinflusst wird, bevor das Geschwindigkeitsprofil (100), die wenigstens eine erste Position Pₘₐₓ dann erreicht, wenn der zu- und abschaltbare Retarder (155) zugeschaltet ist; und
- Steuern (204) des zu- und abschaltbaren Retarders (155), wobei der zu- und abschaltbare Retarder (155) weiterhin zugeschaltet ist, wenn bestimmt wurde, dass dadurch kein negativer Einfluss auf die Geschwindigkeitsentwicklung entsteht, und wobei der zu- und abschaltbare Retarder (155) abgeschaltet wird, wenn bestimmt wurde, dass **dadurch** ein negativer Einfluss auf die Geschwindigkeitsentwicklung entsteht.

2. Verfahren nach Anspruch 1, wobei der negative Einfluss auf die Geschwindigkeitsentwicklung in einer Fahrzeug-Istgeschwindigkeit v_{act} resultiert, die sich von der maximal zulässigen Geschwindigkeit vₘₐₓ durch einen Wert aus der Gruppe unterscheidet:
- 5 - 10 km/h; und
- 5 - 10 % der maximal zulässigen Geschwindigkeit vₘₐₓ.

3. Verfahren nach einem der Ansprüche 1-2, wobei der negative Einfluss auf die Geschwindigkeitsentwicklung bestimmt wird, um einzustellen, ob Kraftstoff zu dem Motor (101) in dem Fahrzeug zugeführt werden muss, bevor das Fahrzeug die erste Position Pₘₐₓ erreicht.

4. Verfahren nach Anspruch 3, wobei das Bestimmen, ob die Kraftstoffzufuhr zu dem Motor erfolgt, auf einer Information basiert, die durch einen Tempomat (120) bereitgestellt wird, der in dem Fahrzeug (100) angeordnet ist.

5. Verfahren nach einem der Ansprüche 1-4, wobei der negative Einfluss auf die Geschwindigkeitsentwicklung bestimmt wird, um einzustellen, ob die Fahrzeug-Istgeschwindigkeit v_{act} einen Wert unterhalb einer bestimmten durchschnittlichen Fahrzeuggeschwindigkeit v_{act_av} erlangt, bevor das Fahrzeug eine erste Position Pₘₐₓ erreicht.

6. Verfahren nach einem der Ansprüche 1-5, wobei der negative Einfluss auf die Geschwindigkeitsentwicklung bestimmt wird, um einzustellen, ob eine Zeit T_{to_max}, die für das Fahrzeug (100) notwendig ist, um die erste Position Pₘₐₓ zu erreichen, einen Zeitgrenzwert T_{to_max_lim} überschreitet, wobei T_{to_max} > T_{to_max_lim} gilt.

7. Verfahren nach einem der Ansprüche 1-6, wobei der zu- und abschaltbare Retarder (155) nachdem der zu- und abschaltbare Retarder (155) abgeschaltet wurde, zugeschaltet wird, bevor eine Bremsanforderung für das Fahrzeug entsteht.

8. Verfahren nach Anspruch 7, wobei der zu- und abschaltbare Retarder (155) eine Verbindungszeitdauer T_{retarder_start} zugeschaltet ist, bevor die Bremsanforderung für das Fahrzeug entsteht, wobei die Verbindungszeitdauer T_{retarder_start} einer Vorbereitungszeitdauer T_{retarder_ready} entspricht, die notwendig ist, um einen abgeschalteten Retarder zum Bremsen vorzubereiten.

9. Verfahren nach Anspruch 8, wobei die Verbindungszeitdauer T_{retarder_start} länger ist als die Vorbereitungszeitdauer T_{retarder_ready}; wobei T_{retarder_start} > T_{retarder_ready} gilt.

10. Verfahren nach einem der Ansprüche 8-9, wobei die Verbindungszeitdauer T_{retarder_start} einer Summe aus der Vorbereitungszeitdauer T_{retarder_ready} und einer marginalen Zeit T_{margin} entspricht; wobei T_{retarder_start =} T_{retarder_ready} + T_{margin gilt}; wobei die marginale Zeit T_{margin} einen Wert aufweist, der ausreichend klein ist, um im Wesentlichen einen negativen Einfluss auf die Geschwindigkeitsentwicklung aufgrund einer geänderten Fahrtsituation vor der Verbindungszeitdauer T_{retarder_start} zu vermeiden.

11. Verfahren nach einem der Ansprüche 1-10, wobei die Höchstgeschwindigkeit vₘₐₓ einem Wert aus der Gruppe entspricht:
- eine konstante Bremsgeschwindigkeit v_{dhsc} für das Fahrzeug (100);
- eine Entfernung zu wenigstens einem vorausfahrenden Fahrzeug;
- eine Streckenneigung für den Streckenabschnitt;
- einem Kurvenverlauf für den Streckenabschnitt;
- eine Geschwindigkeitsbegrenzung für den Streckenabschnitt; und
- eine Zugangsbeschränkung für den Streckenabschnitt.

12. Verfahren nach einem der Ansprüche 1-11, wobei die Information, die den Streckenabschnitt betrifft, einen Streckengradienten umfasst, der auf der Grundlage von einigen Informationen aus der Gruppe bestimmt wird:
- Positionsinformationen, die mit Kartendaten kombiniert werden;
- radarbasierte Informationen;
- kamerabasierte Informationen;
- I nformationen, die von einem anderen Fahrzeug erlangt werden;
- Streckengradienteninformationen und Positionsinformationen, die im Vorfeld in dem Fahrzeug abgespeichert wurden; und
- Informationen, die von Verkehrssystemen erlangt wurden, die dem Streckenbereich entsprechen.

13. Computerprogramm, das einen Programmcode umfasst, dass dann, wenn der Computercode in einem Computer ausgeführt wird, erzählt, dass der Computer das Verfahren nach einem der Ansprüche 1-12 ausführt.

14. Computerprogrammprodukt, umfassend ein computerlesbares Medium und ein Computerprogramm nach Anspruch 13, wobei das Computerprogramm auf dem computerlesbaren Medium enthalten ist.

15. System zum Steuern eines zu- und abschaltbaren Retarders (155), wobei der zu- und abschaltbare Retarder (155) zunächst zugeschaltet ist und auf einen Antriebsstrang in einem Fahrzeug (100) wirkt; **gekennzeichnet durch**:
- eine Simulationsvorrichtung (131), die zum Simulieren wenigstens eines zukünftigen Geschwindigkeitsprofils vₛᵢₘ für wenigstens eine entsprechende Fahrzeug-Istgeschwindigkeit v_{act} während einem vorausliegenden Streckenabschnitt eines Fahrzeugs (100) ausgebildet ist, wobei das Simulieren auf einer Information basiert, die den Streckenabschnitt betrifft und annimmt, dass der zu- und abschaltbare Retarder (155) für einen anfänglichen Teil des Streckenabschnitts zugeschaltet ist;
- eine erste Bestimmungsvorrichtung (132), die zum Bestimmen wenigstens einer entsprechenden ersten Position Pₘₐₓ auf einer Grundlage des wenigstens einen zukünftigen Geschwindigkeitsprofils vₛᵢₘ, an der die wenigstens eine erste Position Pₘₐₓ der wenigstens einen entsprechenden Fahrzeug-Istgeschwindigkeit v_{act} eine maximal zulässige Geschwindigkeit vₘₐₓ überschreiten wird, ausgebildet ist;
- eine zweite Bestimmungsvorrichtung (133), die auf der Grundlage wenigstens eines zukünftigen Geschwindigkeitsprofils vₛᵢₘ ausgebildet ist, um zu bestimmen, ob eine Geschwindigkeitsentwicklung für das Fahrzeug in Verbindung mit der maximal zulässigen Geschwindigkeit vₘₐₓ negativ beeinflusst wird, bevor das Geschwindigkeitsprofil (100) die wenigstens eine erste Position Pₘₐₓ dann erreicht, wenn der zu- und abschaltbare Retarder (155) zugeschaltet ist; und
- eine Retardersteuervorrichtung (134), die zum Steuern des zu- und abschaltbaren Retarders (155) ausgebildet ist, wobei der zu- und abschaltbare Retarder (155) weiterhin zugeschaltet ist, wenn bestimmt wurde, dass **dadurch** kein negativer Einfluss auf die Geschwindigkeitsentwicklung entsteht, und wobei der zu- und abschaltbare Retarder (155) abgeschaltet wird, wenn bestimmt wurde, dass **dadurch** ein negativer Einfluss auf die Geschwindigkeitsentwicklung entsteht.

## Revendications

1. Procédé de commande d'un ralentisseur embrayable et débrayable (155), lorsque ledit ralentisseur embrayable et débrayable (155) est initialement embrayé et agit sur un groupe motopropulseur d'un véhicule (100) ; **caractérisé par** :
- la simulation (201) d'au moins un profil de vitesse future vₛᵢₘ pour au moins une vitesse réelle respective du véhicule v_{act} sur une section de route à l'avant d'un véhicule (100), ladite simulation se fondant sur des informations relatives à ladite section de route et supposant que ledit ralentisseur embrayable et débrayable (155) est embrayé pour au moins une partie initiale de ladite section de route ;
- la détermination (202), en fonction dudit au moins un profil de vitesse future vₛᵢₘ, d'au moins une première position respective Pₘₐₓ où à ladite au moins une première position Pₘₐₓ, ladite au moins une vitesse réelle respective du véhicule v_{act} excédera une vitesse maximale autorisée Vₘₐₓ ;
- la détermination (203), en fonction dudit au moins un profil de vitesse future vₛᵢₘ, du fait qu'un développement de vitesse pour ledit véhicule sera ou non impacté négativement en relation avec ladite vitesse maximale autorisée vₘₐₓ avant que ledit profil de vitesse (100) atteigne ladite au moins une première position Pₘₐₓ, si ledit ralentisseur embrayable et débrayable (155) est embrayé ; et
- la commande (204) dudit ralentisseur embrayable et débrayable (155), où ledit ralentisseur embrayable et débrayable (155) continue à être embrayé s'il a été déterminé qu'il ne survient ainsi aucun impact négatif sur ledit développement de vitesse, et ledit ralentisseur embrayable et débrayable (155) est débrayé s'il a été déterminé qu'il survient ainsi un impact négatif sur ledit développement de vitesse.

2. Procédé selon la revendication 1, dans lequel ledit impact négatif sur ledit développement de vitesse résulte en une vitesse réelle du véhicule v_{act} qui diffère de ladite vitesse maximale autorisée vₘₐₓ d'une valeur comprise dans le groupe :
- 5 à 10 km/h ; et
- 5 à 10 % de la vitesse maximale autorisée vₘₐₓ.

3. Procédé selon l'une quelconque des revendications 1 à 2, dans lequel il est déterminé que ledit impact négatif survient sur ledit développement de vitesse, si du carburant doit être fourni à un moteur (101) dans ledit véhicule avant que ledit véhicule atteigne ladite première position Pₘₐₓ.

4. Procédé selon la revendication 3, dans lequel ladite détermination du fait que la fourniture dudit carburant audit moteur se produit ou non se fonde sur des informations fournies par un régulateur d'allure (120) disposé dans ledit véhicule (100).

5. Procédé selon l'une quelconque des revendications 1 à 4, dans lequel il est déterminé que ledit impact négatif survient sur ledit développement de vitesse si la vitesse réelle du véhicule v_{act} atteint une valeur inférieure à une vitesse moyenne déterminée du véhicule v_{act_av} avant que ledit véhicule atteigne ladite première position Pₘₐₓ.

6. Procédé selon l'une quelconque des revendications 1 à 5, dans lequel il est déterminé que ledit impact négatif survient sur ledit développement de vitesse si un temps T_{to_max}, qui est nécessaire pour que ledit véhicule (100) atteigne ladite première position Pₘₐₓ, excède une valeur de seuil temporel T_{to_max_lim} ; T_{to_max} > T_{to_max_lim}.

7. Procédé selon l'une quelconque des revendications 1 à 6, dans lequel ledit ralentisseur embrayable et débrayable (155), après que ledit ralentisseur embrayable et débrayable (155) a été débrayé, est embrayé avant que survienne un besoin de freinage pour ledit véhicule.

8. Procédé selon la revendication 7, dans lequel ledit ralentisseur embrayable et débrayable (155) est embrayé pendant une période de temps d'embrayage T_{retarder_start} avant que survienne ledit besoin de freinage pour ledit véhicule, ladite période de temps d'embrayage T_{retarder_start} étant associée à une période de temps de préparation T_{retarder_ready}, qui est requise pour préparer un ralentisseur débrayé à un freinage.

9. Procédé selon la revendication 8, dans lequel ladite période de temps d'embrayage T_{retarder_start} est plus longue que ladite période de temps de préparation T_{retarder_ready} ; T_{retarder_start} > T_{retarder_ready}.

10. Procédé selon l'une quelconque des revendications 8 à 9, dans lequel ladite période de temps d'embrayage T_{retarder_start} est égale à ladite période de temps de préparation T_{retarder_ready} plus un temps marginal T_{margin} ; T_{retarder_start} = T_{retarder_ready} + T_{margin} ; ledit temps marginal T_{margin} ayant une valeur qui est suffisamment petite pour éviter essentiellement un impact négatif sur ledit développement de vitesse, dû à un changement de situation de conduite avant ladite période de temps d'embrayage T_{retarder_start}.

11. Procédé selon l'une quelconque des revendications 1 à 10, dans lequel ladite vitesse maximale autorisée vₘₐₓ est associée à l'une des conditions parmi le groupe suivant :
- une vitesse de freinage à vitesse constante v_{dhsc} pour ledit véhicule (100) ;
- une distance par rapport à au moins un véhicule à l'avant ;
- un gradient de route pour ladite section de route ;
- une courbure pour ladite section de route ;
- une limite de vitesse pour ladite section de route ; et
- une limitation d'accessibilité pour ladite section de route.

12. Procédé selon l'une quelconque des revendications 1 à 11, dans lequel lesdites informations concernant ladite section de route comprennent un gradient de route, qui est déterminé en fonction de certaines informations du groupe suivant :
- informations de positionnement combinées à des données de cartographie ;
- informations basées sur un radar ;
- informations basées sur une caméra ;
- informations obtenues d'un autre véhicule que ledit véhicule ;
- informations de gradient de route et informations de positionnement préalablement stockées dans le véhicule ; et
- informations obtenues de systèmes de trafic concernant ladite section de route.

13. Programme informatique comprenant un code de programme qui, lorsque ledit code de programme est exécuté dans un ordinateur, fait en sorte que ledit ordinateur mette en oeuvre le procédé selon l'une quelconque des revendications 1 à 12.

14. Produit de programme informatique comprenant un support lisible par ordinateur et un programme informatique selon la revendication 13, ledit programme informatique étant compris dans ledit support lisible par ordinateur.

15. Système de commande d'un ralentisseur embrayable et débrayable (155), ledit ralentisseur embrayable et débrayable (155) étant initialement embrayé et agissant sur un groupe motopropulseur d'un véhicule (100) ; **caractérisé par** :
- un dispositif de simulation (131), conçu pour la simulation d'au moins un profil de vitesse future vₛᵢₘ pour au moins une vitesse réelle respective du véhicule v_{act} sur une section de route à l'avant d'un véhicule (100), ladite simulation se fondant sur des informations relatives à ladite section de route et supposant que ledit ralentisseur embrayable et débrayable (155) est embrayé pour au moins une partie initiale de ladite section de route ;
- un premier dispositif de détermination (132), conçu pour la détermination, en fonction dudit au moins un profil de vitesse future vₛᵢₘ, d'au moins une première position respective Pₘₐₓ où à ladite au moins une première position Pₘₐₓ, ladite au moins une vitesse réelle respective du véhicule v_{act} excédera une vitesse maximale autorisée vₘₐₓ ;
- un deuxième dispositif de détermination (133), conçu pour la détermination, en fonction dudit au moins un profil de vitesse future vₛᵢₘ, du fait qu'un développement de vitesse pour ledit véhicule sera ou non impacté négativement en relation avec ladite vitesse maximale autorisée vₘₐₓ avant que ledit profil de vitesse (100) atteigne ladite au moins une première position Pₘₐₓ, si ledit ralentisseur embrayable et débrayable (155) est embrayé ; et
- un dispositif de commande de ralentisseur (134), conçu pour la commande dudit ralentisseur embrayable et débrayable (155), où ledit ralentisseur embrayable et débrayable (155) continue à être embrayé s'il a été déterminé qu'il ne survient ainsi aucun impact négatif sur ledit développement de vitesse, et ledit ralentisseur embrayable et débrayable (155) est débrayé s'il a été déterminé qu'il survient ainsi un impact négatif sur ledit développement de vitesse.
